# EUROPEAN PATENT APPLICATION

(11) **EP 4 167 370 A1**
(43) Date of publication of application: **19.04.2023**
(21) Application number: 21833634.5
(22) Date of filing: 12.05.2021
(51) Int. Cl.: H01M 50/50

(54) **TAB AND CELL HAVING SAME, BATTERY MODULE AND BATTERY PACK**

(30) Priority: 30.06.2020 CN 202010617233
(71) Applicant: BYD Company Limited, Shenzhen, Guangdong 518118 (CN)
(72) Inventor: WU, Wengang, Shenzhen, Guangdong 518118 (CN); LIU, Yanchu, Shenzhen, Guangdong 518118 (CN); ZHOU, Guishu, Shenzhen, Guangdong 518118 (CN); LI, Hanwen, Shenzhen, Guangdong 518118 (CN); TANG, Jun, Shenzhen, Guangdong 518118 (CN)
(74) Representative: Arnold & Siedsma
(86) International application number: PCT/CN2021/093194
(87) International publication number: WO 2022/001382

(57) **Abstract**

Disclosed are a tab (100), a battery core having the same, a battery module, and a battery pack. The tab (100) includes a first tab sheet (1) and a second tab sheet (2). The second tab sheet (2) is arranged on a side of the first tab sheet (1) in a thickness direction. At least one cooling cavity (11) is defined between the second tab sheet (2) and the first tab sheet (1). The cooling cavity (11) is filled with a cooling medium.

## Description

### CROSS-REFERENCE TO RELATED APPLICATIONS

The present disclosure claims priority to Chinese Patent Application No. 202010617233.1 filed by BYD Co., Ltd. on June 30, 2020 and entitled "TAB, BATTERY CORE HAVING SAME, BATTERY MODULE, AND BATTERY PACK".

### FIELD

The present disclosure relates to the technical field of batteries, and more specifically, to a tab, a battery core having the same, a battery module, and a battery pack.

### BACKGROUND

In the related art, the power battery pack has a large operating current and a large amount of heat. In addition, because the power battery pack is in a relatively closed environment, the temperature rise of the tabs is relatively large. However, when the temperature of the tab is high for a long time, the performance of the battery core will be affected and the service life of the battery core will be shortened.

### SUMMARY

The present disclosure aims to resolve at least one of the technical problems existing in the related art. One object of the present disclosure is to provide a tab, which can effectively reduce temperatures of the tab and the battery core, so that the performance of the battery core is more excellent and the service life of the battery core is extended.

Another object of the present disclosure is to provide a battery core having the tab.

Yet another object of the present disclosure is to provide a battery module having the battery core.

Still another object of the present disclosure is to provide a battery pack having the battery core.

A tab according to an embodiment of a first aspect of the present disclosure includes: a first tab sheet; and a second tab sheet, arranged on a side of the first tab sheet in a thickness direction. At least one cooling cavity is defined between the second tab sheet and the first tab sheet, and the cooling cavity is filled with a cooling medium.

In the tab according to the embodiment of the present disclosure, the first tab sheet and the second tab sheet are arranged, at least one cooling cavity is defined between the second tab sheet and the first tab sheet, and the cooling cavity is filled with the cooling medium. In this way, a good heat dissipation effect is achieved, and the temperatures of the tab and the battery core can be effectively reduced, so that the performance of the battery core is more excellent and the service life of the battery core is extended.

According to some embodiments of the present disclosure, the tab further includes: a third tab sheet, arranged between the first tab sheet and the second tab sheet. At least one cooling channel is formed on the third tab sheet, and the cooling cavity is jointly defined by the cooling channel, the first tab sheet, and/or the second tab sheet.

According to some embodiments of the present disclosure, the cooling channel extends through the third tab sheet along a thickness direction of the third tab sheet, and the cooling cavity is jointly defined by the cooling channel, the first tab sheet, and the second tab sheet.

According to some embodiments of the present disclosure, one side surface of the third tab sheet in the thickness direction contacts a side surface of the first tab sheet facing the third tab sheet; and/or another side surface of the third tab sheet in the thickness direction contacts a side surface of the second tab sheet facing the third tab sheet.

According to some embodiments of the present disclosure, the cooling channel includes: a first cooling channel, where one end of the first cooling channel extends through the side surface of the third tab sheet; and multiple second cooling channels, arranged at intervals along a length direction of the first cooling channel. One end of each of the second cooling channels is in communication with the first cooling channel, and another end of each of the second cooling channels extends away from the first cooling channel along a width direction of the first cooling channel.

According to some embodiments of the present disclosure, the first cooling channel includes a first channel segment and a second channel segment connected with each other. A width of the first channel segment is greater than a width of the second channel segment. An end of the second channel segment away from the first channel segment extends through the side surface of the third tab sheet, and the ends of the multiple first cooling channels are in communication with the first channel segment.

According to some embodiments of the present disclosure, the multiple second cooling channels are parallel to each other and are all perpendicular to the first cooling channel, and the multiple second cooling channels are located on a same side of the first cooling channel.

A battery core according to an embodiment of a second aspect of the present disclosure includes: a battery core body; and a tab, where the tab is the tab according to the embodiment of the first aspect of the present disclosure. The tab is arranged on the battery core body, and one part of the cooling cavity of the tab is inside the battery core body and an other part thereof is outside the battery core body.

A battery module according to an embodiment of a third aspect of the present disclosure includes the battery core according to the embodiment of the second aspect of the present disclosure.

A battery pack according to an embodiment of a fourth aspect of the present disclosure includes the battery core according to the embodiment of the second aspect of the present disclosure.

Additional aspects and advantages of the present disclosure are to be partially given in the following description, and some will become apparent in the following description, or may be learned by practice of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings, where:
FIG. 1 is a three-dimensional view of a tab according to an embodiment of the present disclosure.
FIG. 2 is an exploded view of the tab shown in FIG. 1.
FIG. 3 is a top view of the tab shown in FIG. 1.
FIG. 4 is a cross-sectional view taken along line A-A in FIG. 3.
FIG. 5 is an enlarged view of a part B circled in FIG. 4.

### Reference numerals of the accompanying drawing:

100: Tab;
1: First tab sheet; 11: Cooling cavity; 2: Second tab sheet;
3: Third tab sheet; 4: Cooling channel; 41: First cooling channel;
411: First channel segment; 412: Second channel segment;
42: Second cooling channel; and 5: Tab tape.

### DETAILED DESCRIPTION

The embodiments of the present disclosure are described in detail below, and the embodiments described with reference to accompanying drawings are exemplary.

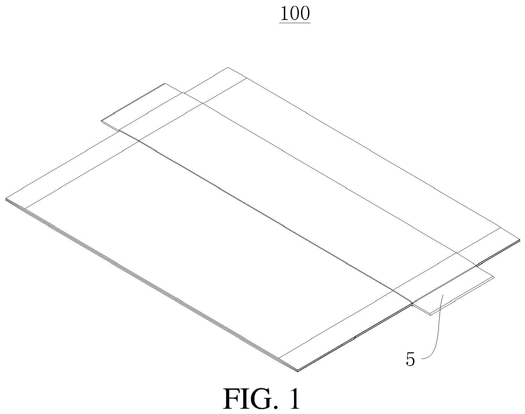

A tab 100 according to an embodiment of a first aspect of the present disclosure is described below with reference to FIG. 1 to FIG. 5. The tab 100 may be applicable to a battery core (not shown). In the following description of the present disclosure, the tab 100 applicable to the battery core is used as an example for description.

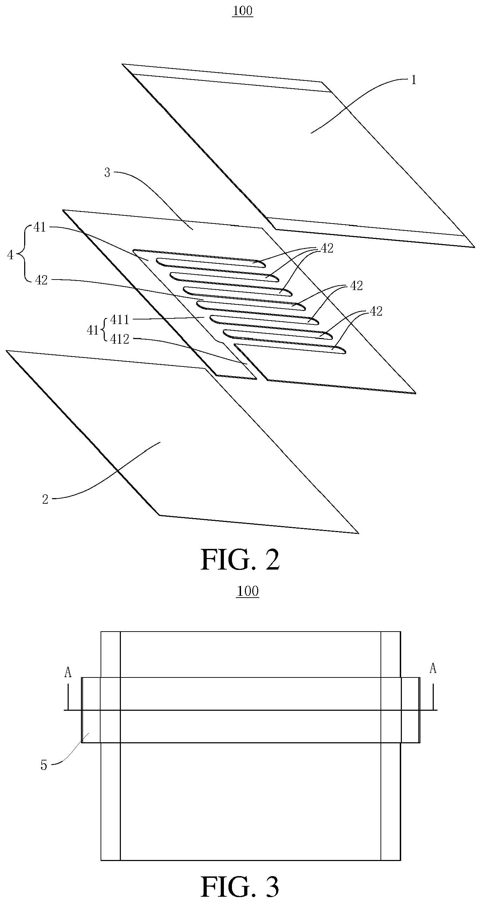

As shown in FIG. 1 and FIG. 2, the tab 100 according to the embodiment of the first aspect of the present disclosure includes a first tab sheet 1 and a second tab sheet 2. The second tab sheet 2 is arranged on a side of the first tab sheet 1 in a thickness direction. At least one cooling cavity 11 is defined between the second tab sheet 2 and the first tab sheet 1. The cooling cavity 11 is filled with a cooling medium.

Therefore, when the battery core is operating, heat generated by the battery core may be transferred to the cooling cavity 11 through parts of the first tab sheet 1 and the second tab sheet 2 in the battery core, and the cooling medium in the cooling cavity 11 can absorb the heat and transfer the heat to parts of the first tab sheet 1 and the second tab sheet 2 that are outside the battery core. In this way, the heat generated by the battery core can be dissipated to the outside of the battery core, so as to effectively reduce the temperature of the tab 100, thereby achieving a better heat dissipation effect. Therefore, the battery core can have excellent performance under higher charge and discharge currents, and the service life of the battery core can be extended.

In the tab 100 according to the embodiment of the present disclosure, the first tab sheet 1 and the second tab sheet 2 are arranged, at least one cooling cavity 11 is defined between the second tab sheet 2 and the first tab sheet 1, and the cooling cavity 11 is filled with the cooling medium. In this way, a good heat dissipation effect is achieved, and the temperatures of the tab 100 and the battery core can be effectively reduced, so that the performance of the battery core is more excellent and the service life of the battery core is extended.

In an embodiment, referring to FIG. 1, the tab 100 may include a tab tape 5. The tab tape 5 is arranged on surfaces of the first tab sheet 1 and the second tab sheet 2 facing away from each other to achieve sealing with the tab 100 and an aluminum plastic film. Therefore, the cooling medium in the cooling cavity 11 can extend the sealing life of the tab tape 5 while reducing the temperature of the tab 100, so that the battery core can ensure the stability of the sealing structure under higher charging and discharging currents.

In some embodiments of the present disclosure, referring to FIG. 2, the tab 100 further includes: a third tab sheet 3. The third tab sheet 3 is arranged between the first tab sheet 1 and the second tab sheet 2. At least one cooling channel 4 is formed on the third tab sheet 3, and the cooling cavity 11 is jointly defined by the cooling channel 4 and the first tab sheet 1 and/or the second tab sheet 2.

For example, when one cooling cavity 11 is formed, the cooling cavity 11 may be jointly defined by the cooling channel 4 and the first tab sheet 1, or the cooling cavity 11 may also be jointly defined by the cooling channel 4 and the second tab sheet 2. Certainly, the cooling cavity 11 may be jointly defined by the cooling channel 4 and the first tab sheet 1 and the second tab sheet 2. When multiple cooling cavities 11 are formed, the multiple cooling cavities 11 may be all jointly defined by the cooling channel 4 and the first tab sheet 1; or the multiple cooling cavities 11 may be all jointly defined by the cooling channel 4 and the second tab sheet 2; or the multiple cooling cavities 11 may be all jointly defined by the cooling channel 4 and the first tab sheet 1 and the second tab sheet 2; or a part of the multiple cooling cavities 11 is jointly defined by the cooling channel 4 and the first tab sheet 1, and an other part of the multiple cooling cavities 11 is jointly defined by the cooling channel 4 and the second tab sheet 2. Certainly, alternatively, a part of the multiple cooling cavities 11 is jointly defined by the cooling channel 4 and the first tab sheet 1 or the second tab sheet 2, and an other part of the multiple cooling cavities 11 is jointly defined by the cooling channel 4 and the first tab sheet 1 and the second tab sheet 2.

Therefore, by arranging the third tab sheet 3, a cooling channel 4 may be processed on the third tab sheet 3 while ensuring that the cooling cavity 11 can be formed to effectively reduce the temperature of the tab 100 and improve the performance of the battery core. In this way, structures of the first tab sheet 1 and the second tab sheet 2 can be relatively simple, which facilitates the processing of the first tab sheet 1 and the second tab sheet 2.

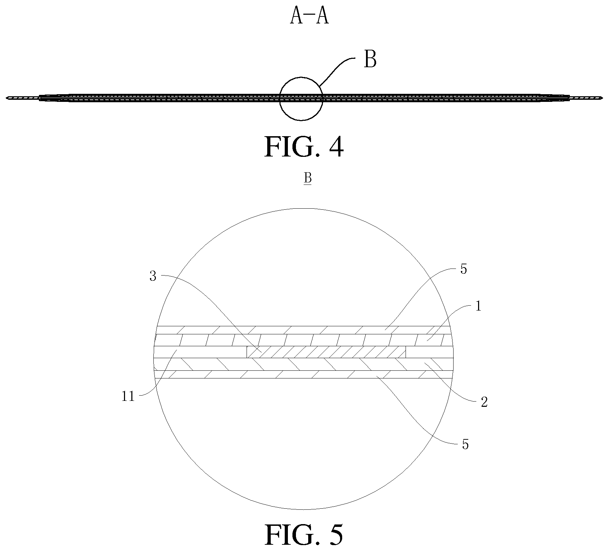

In some optional embodiments of the present disclosure, with reference to FIG. 2 and FIG. 5, the cooling channel 4 extends through the third tab sheet 3 along a thickness direction of the third tab sheet 3, and the cooling cavity 11 is jointly defined by the cooling channel 4 and the first tab sheet 1 and the second tab sheet 2. Therefore, since the third tab sheet 3 is generally thin, this arrangement can facilitate the processing of the cooling channel 4 while achieving effective heat dissipation of the entire tab 100, thereby improving the processing efficiency and shortening working hours.

Certainly, the present disclosure is not limited thereto. The cooling channel 4 may also be recessed from a side surface of the third tab sheet 3 facing the first tab sheet 1 toward the second tab sheet 2 and/or recessed from a side surface of the third tab sheet 3 facing the second tab sheet 2 toward the first tab sheet 1. Through this arrangement, the effective heat dissipation of the entire tab 100 can also be achieved, and it is beneficial to achieve the sealing of the cooling cavity 11 and avoid the leakage of the cooling medium.

In an embodiment, as shown in FIG. 5, one side surface of the third tab sheet 3 in the thickness direction contacts a side surface of the first tab sheet 1 facing the third tab sheet 3; and/or another side surface of the third tab sheet 3 in the thickness direction contacts a side surface of the second tab sheet 2 facing the third tab sheet 3. That is to say, only the side surface of the third tab sheet 3 in the thickness direction may contact the first tab sheet 1, or only the other side surface of the third tab sheet 3 in the thickness direction may contact the second tab sheet 2, and two side surfaces of the third tab sheet 3 in the thickness direction may respectively contact the first tab sheet 1 and the second tab sheet 2. Therefore, through the above arrangement, the cooling channel 4, the first tab sheet 1, and the second tab sheet 2 may jointly define the cooling cavity 11 in a more desirable way, so as to avoid the leakage of the cooling medium while realizing the heat dissipation of the tab 100. Moreover, the third tab sheet 3 is caused to contact the first tab sheet 1 and/or the second tab sheet 2, which facilitates heat transfer, so that the heat on the first tab sheet 1 and the second tab sheet 2 can be preferably transferred to the cooling medium, thereby discharging the heat out of the battery core.

In some specific embodiments of the present disclosure, referring to FIG. 2, the cooling channel 4 includes a first cooling channel 41 and multiple second cooling channels 42. In the description of the disclosure, "multiple" means two or more.

In an embodiment, one end of the first cooling channel 41 extends through the side surface of the third tab sheet 3. The multiple second cooling channels 42 are arranged at intervals along a length direction of the first cooling channel 41. One end of each of the second cooling channels 42 (for example, a left end in FIG. 2) is in communication with the first cooling channel 41, and another end of each of the second cooling channels 42 (for example, a right end in FIG. 2) extends away from the first cooling channel 41 along a width direction of the first cooling channel 41.

For example, seven second cooling channels 42 are shown in the example of FIG. 2. After flowing in from the side surface of the third tab sheet 3, the cooling medium first flows into the first cooling channel 41, and then flows along the first cooling channel 41 to the seven second cooling channels 42, so that the cooling cavity 11 is filled with the cooling medium. When the battery core is operating, the heat of the battery core may be transferred to the cooling medium, heat exchange is performed through the cooling medium, and finally the heat is dissipated to the outside of the battery core.

Seven second cooling channels 42 are shown in FIG. 2 for illustrative description, but after reading the technical solution of the present disclosure, a person of ordinary skill can obviously understand that the solution is applied to the technical solutions of other numbers of second cooling channels 42, which also falls within the protection scope of the present disclosure.

By arranging the first cooling channel 41 and the multiple second cooling channels 42 arranged at intervals, compared with the integral cooling channel 4, the heat absorbed by the cooling medium can be more effectively dissipated to the outside of the battery core. Therefore, the heat dissipation of the tab 100 and the battery core can be more effectively realized, and the battery core can have a stable sealing structure under higher charge and discharge current, so that the performance of the battery core is more excellent.

In an embodiment, as shown in FIG. 2, the first cooling channel 41 includes a first channel segment 411 and a second channel segment 412 connected with each other. A width of the first channel segment 411 is greater than a width of the second channel segment 412. An end of the second channel segment 412 away from the first channel segment 411 extends through the side surface of the third tab sheet 3, and the ends of the multiple first cooling channels 41 are in communication with the first channel segment 411.

For example, with reference to FIG. 2, after the first tab sheet 1, the second tab sheet 2, and the third tab sheet 3 are connected, the cooling medium may be added through the second channel segment 412, and the cooling medium can flow along the second channel segment 412 to the first channel segment 411 and then flow from the first channel segment 411 to the multiple second cooling channels 42. Upon completion of filling with the cooling medium, the second channel segment 412 may be extruded and sealed by mechanical pressure, and finally sealed by laser welding or electric resistance welding to prevent the cooling medium from flowing out of the second channel segment 412. By arranging the first channel segment 411 and the second channel segment 412, the filling of the cooling medium is facilitated, and since the width of the second channel segment 412 is less than the width of the first channel segment 411, the sealing of the second channel segment 412 is facilitated. The leakage of the cooling medium due to the excessively large width of the second channel segment 412 can be avoided, and the reliability is high.

In some optional embodiments of the present disclosure, referring to FIG. 2, the multiple second cooling channels 42 are parallel to each other and are all perpendicular to the first cooling channel 41, and the multiple second cooling channels 42 are located on a same side of the first cooling channel 41. Through this arrangement, the cooling medium flowing in from the first cooling channel 41 can flow evenly to the multiple second cooling channels 42. The structure is simple, the processing is convenient, and the heat dissipation efficiency of the entire cooling cavity 11 can be improved, thereby effectively discharging the heat in the battery core.

In an embodiment, the first tab sheet 1, the second tab sheet 2, and the third tab sheet 3 may be connected by welding. For example, hybrid welding can be achieved between the third tab sheet 3 and the first tab sheet 1 and between the third tab sheet 3 and the second tab sheet 2 by diffusion welding or brazing. In this way, solid connection between the third tab sheet 3 and the first tab sheet 1 and between the third tab sheet 3 and the second tab sheet 2 can be realized, so that the cooling cavity 11 can be defined, thereby realizing the heat dissipation of the tab 100 and avoiding the leakage of the cooling medium. In addition, through this arrangement, the structure is simple and costs are relatively low.

In an embodiment, the cooling medium may be acetone, water, ethanol, or the like. Therefore, since acetone, water, or ethanol have a relatively high heat transfer coefficient, the heat of the battery core can be effectively absorbed and discharged to achieve a desirable heat dissipation effect.

In an embodiment, the first tab sheet 1 and the second tab sheet 2 may both be metal sheets. With this arrangement, the entire tab 100 can have better electrical conductivity, so as to lead out the electricity in the battery core and generate a loop. Moreover, the metal sheet has desirable thermal conductivity. By using the first tab sheet 1 and the second tab sheet 2 metal sheets, it is beneficial to transfer the heat in the battery core to the outside of the battery core, thereby realizing the heat dissipation of the tab 100 and the whole battery core.

In an embodiment, the first tab sheet 1 and the second tab sheet 2 may both be aluminum parts or copper parts. In an embodiment, for example, when the tab 100 is a positive tab, the first tab sheet 1, the second tab sheet 2, and the third tab sheet 3 may all be aluminum parts; and when the tab 100 is a negative tab, the first tab sheet 1, the second tab sheet 2, and the third tab sheet 3 may all be copper parts. Therefore, when the tab 100 is the positive tab, the aluminum parts have better conductivity, softer texture, and lower costs, and an oxide protective film layer may be formed on surfaces of the first tab sheet 1 and the second tab sheet 2. Moreover, a positive electrode has a high potential, and a dense oxide protective film can prevent a current collector from oxidizing. When the tab 100 is the negative tab, the copper parts have better conductivity, and the heat dissipation is effective.

A battery core according to an embodiment of a second aspect of the present disclosure includes a battery core body and a tab 100. In an embodiment, the tab 100 is the tab 100 according to the embodiment of the first aspect of the present disclosure. The tab 100 is arranged on the battery core body. One part of the cooling cavity 11 of the tab 100 is inside the battery core body and an other part thereof is outside the battery core body. The battery core body is a structure of the battery core other than the tab 100, for example, the battery core body may be composed of a positive plate, a negative plate, and a separator plate.

According to the battery core in the embodiment of the present disclosure, by using the above tab 100, the cooling medium in the cooling cavity 11 can absorb heat generated by the battery core body during operation and discharge the heat to the outside of the battery core body. In this way, a better heat dissipation effect can be achieved, so that the battery core has excellent performance, and the stability of the sealing structure can be ensured under higher charge and discharge currents.

A battery module according to an embodiment of a third aspect of the present disclosure (not shown) includes the battery core according to the embodiment of the second aspect of the present disclosure.

For example, the battery module may include a connecting sheet and multiple battery cores. The connecting sheet can realize the connection between the multiple battery cores. An electrode core may be arranged in each battery core. One end of the tab 100 is connected with the electrode core, for example, by welding, and another end of the tab 100 is connected with the connecting sheet, for example, by welding. A cooling structure may be arranged on the battery module. A part of the tab 100 outside the battery core body corresponding to the cooling cavity 11 may contact the cooling structure. In this way, when a large current is applied to the tab 100, the heat inside the battery core may be absorbed and transferred to the outside of the battery core through the cooling medium, and then discharged through the cooling structure, thereby effectively avoiding the temperature rise of the tab 100, and improving the performance of the entire battery module.

According to the battery module of the embodiment of the present disclosure, by using the above battery core, when a large current is applied to the tab 100, an excessively high temperature rise can be avoided, and a higher heat dissipation effect can be achieved, so that the entire battery module has excellent performance.

A battery pack according to an embodiment of a fourth aspect of the present disclosure (not shown) includes the battery core according to the embodiment of the second aspect of the present disclosure.

According to the battery pack of the embodiment of the present disclosure, by using the above battery core, the temperature of the battery pack can be effectively reduced, and the temperature of the battery pack can be prevented from being excessively high, so that the battery pack can ensure the stability of the sealing structure under large charge and discharge currents, and ensure that the battery pack has excellent performance.

Other configurations and operations of the battery pack according to the embodiment of the present disclosure are known to those of ordinary skill in the art, and the details are not described herein again.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation to the present disclosure.

In the description of the present disclosure, a "first feature", or a "second feature" can include one or more features.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, exemplary descriptions of the foregoing terms do not necessarily refer to the same embodiment or example.

Although the embodiments of the present disclosure have been shown and described, persons of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A tab, comprising:
a first tab sheet; and
a second tab sheet, arranged on a side of the first tab sheet in a thickness direction, wherein at least one cooling cavity is defined between the second tab sheet and the first tab sheet; and the cooling cavity is filled with a cooling medium.

2. The tab according to claim 1, further comprising:
a third tab sheet, arranged between the first tab sheet and the second tab sheet, wherein at least one cooling channel is formed on the third tab sheet; and the cooling cavity is jointly defined by the cooling channel, the first tab sheet, and/or the second tab sheet.

3. The tab according to claim 2, wherein the cooling channel extends through the third tab sheet along a thickness direction of the third tab sheet; and the cooling cavity is jointly defined by the cooling channel, the first tab sheet, and the second tab sheet.

4. The tab according to claim 2 or 3, wherein one side surface of the third tab sheet in the thickness direction contacts a side surface of the first tab sheet facing the third tab sheet; and/or
another side surface of the third tab sheet in the thickness direction contacts a side surface of the second tab sheet facing the third tab sheet.

5. The tab according to any of claims 2 to 4, wherein the cooling channel comprises:
a first cooling channel, wherein one end of the first cooling channel extends through the side surface of the third tab sheet; and
a plurality of second cooling channels, arranged at intervals along a length direction of the first cooling channel, wherein one end of each of the second cooling channels is in communication with the first cooling channel; and another end of each of the second cooling channels extends away from the first cooling channel along a width direction of the first cooling channel.

6. The tab according to claim 5, wherein the first cooling channel comprises a first channel segment and a second channel segment connected with each other; a width of the first channel segment is greater than a width of the second channel segment; an end of the second channel segment away from the first channel segment extends through the side surface of the third tab sheet; and the ends of the plurality of first cooling channels are in communication with the first channel segment.

7. The tab according to claim 5 or 6, wherein the plurality of second cooling channels are parallel to each other and are all perpendicular to the first cooling channel; and the plurality of second cooling channels are located on a same side of the first cooling channel.

8. A battery core, comprising:
a battery core body; and
a tab, wherein the tab is the tab according to any of claims 1 to 7; the tab is arranged on the battery core body; one part of the cooling cavity of the tab is inside the battery core body; and an other part thereof is outside the battery core body.

9. A battery module, comprising the battery core according to claim 8.

10. A battery pack, comprising the battery core according to claim 8.
